# EUROPEAN PATENT APPLICATION

(11) **EP 4 818 125 A1**
(43) Date of publication of application: **07.10.2026**
(21) Application number: 26169647.0
(22) Date of filing: 31.03.2026
(51) Int. Cl.: C02F 1/32, C02F 1/36, C02F 1/72, C02F 1/44

(54) **METHOD FOR DEGRADATION OF PFAS BASED ON SONOCATALYSIS**

(30) Priority: 31.03.2025 US 202519095255
(71) Applicant: Services Pétroliers Schlumberger, 75007 Paris (FR); Schlumberger Technology B.V., 2514 JG The Hague (NL)
(72) Inventor: ZOLFAGHARI, Alireza, Rosharon, 77583 (US); YUN, Jushik, Rosharon, 77583 (US)
(74) Representative: Schlumberger Intellectual Property Department

(57) **Abstract**

Certain aspects of the present disclosure provide a method for removing PFAS contaminants from a PFAS contaminated aqueous stream. The method includes introducing the PFAS contaminated aqueous stream into a reactor with a photocatalyst reagent in the presence of UV radiation and ultrasonic energy to degrade the PFAS contaminants and produce a treated aqueous stream comprising byproducts of the degraded PFAS contaminants.

## Description

### BACKGROUND

### Field of the Disclosure

Embodiments of the present disclosure generally relate to methods and systems for reducing the concentration of per- and polyfluoroalkyl substances (PFAS) in an aqueous fluid.

### Description of Related Art

Per- and polyfluoroalkyl substances (PFAS) are a group of synthetic organofluorine chemical compounds that have multiple fluorine atoms attached to an alkyl chain. PFAS have been produced industrially and used for a variety of industrial and commercial applications including cosmetics, surfactants, and fabric stain retardants and in a variety of other commercially important materials. From an environmental perspective, PFAS become fugitives during industrial processing with the result that PFAS finds its way into the soil and water supplies. The strong carbon-fluorine (C-F) bond that makes PFAS compounds stable in high temperature environments also makes them extremely slow to decompose in the environment and in the bodies of humans and animals. According to the United States Environmental Protection Agency, the two most-studied PFAS, PFOA and PFOS, have been shown to be toxic to humans and have been associated with several health effects including increased cholesterol levels; low infant birth weights; effects on the immune system; liver and kidney damage; cancer (for PFOA); and thyroid hormone disruption (for PFOS).

Therefore, there is a need for methods and systems for reducing the concentration of PFAS in an aqueous fluid.

### SUMMARY

One aspect provides a method for removing PFAS contaminants from a PFAS contaminated aqueous stream. The method includes introducing the PFAS contaminated aqueous stream into a reactor with a photocatalyst reagent in the presence of UV radiation and ultrasonic energy to degrade the PFAS contaminants and produce a treated aqueous stream comprising byproducts of the degraded PFAS contaminants.

Another aspect provides a method for removing PFAS contaminants from a PFAS contaminated aqueous stream. The method includes introducing the PFAS contaminated aqueous stream into a continuous flow reactor with a photocatalyst reagent in the presence of UV radiation and ultrasonic energy to degrade the PFAS contaminants and produce a treated aqueous stream comprising byproducts of the degraded PFAS contaminants. The continuous flow reactor includes one or more tubular reactor bodies in which the PFAS contaminated aqueous stream and the photocatalyst reagent are exposed to the UV radiation and the ultrasonic energy. The continuous flow reactor further includes an outer reactor body that encircles the one or more tubular reactor bodies.

Yet another aspect provides a continuous flow reactor. The continuous flow reactor includes one or more quartz tubular reactor bodies that each define a reactor region in which a PFAS contaminated aqueous stream flows and a photocatalyst reagent are exposed to UV radiation and ultrasonic energy to degrade the PFAS contaminants. The continuous flow reactor further includes an outer reactor body that encircles the one or more quartz tubular reactor bodies. The continuous flow reactor further includes one or more UV sources positioned to deliver the UV radiation to the PFAS contaminated aqueous stream and the photocatalyst reagent. The continuous flow reactor further includes one or more ultrasonic transducers positioned to deliver the ultrasonic energy to the PFAS contaminated aqueous stream and the photocatalyst reagent.

### BRIEF DESCRIPTION OF DRAWINGS

The appended figures illustrate only exemplary embodiments and are therefore not to be considered limiting of the scope of the disclosure, as the disclosure may admit to other equally effective embodiments.
FIG. 1 is a schematic illustration of a systems for removing PFAS from an aqueous fluid in accordance with one or more embodiments of the present disclosure.
FIG. 2 is a schematic illustration of a continuous flow reactor in accordance with one or more embodiments of the present disclosure.
FIG. 3 is a schematic illustration of another continuous flow reactor in accordance with one or more embodiments of the present disclosure.
FIG. 4 is a schematic illustrations of a batch reactor in accordance with one or more embodiments of the present disclosure.

To facilitate understanding, identical reference numerals have been used, where possible, to designate identical elements that are common to the figures. It is contemplated that elements and features of one embodiment may be beneficially incorporated in other embodiments without further recitation.

### DETAILED DESCRIPTION

Embodiments of the present disclosure generally relate to systems and methods for the removal of PFAS from an aqueous fluid.

In one or more embodiments which can be combined with other embodiments, a process for removal of PFAS from an aqueous fluid is provided. The process of PFAS removal includes a sonocatalysis process using nanosize magnetite particles under UV radiation in aqueous environments. The process of PFAS removal includes exposing the aqueous fluid to a photocatalyst reagent, which is a solution of hydrogen peroxide (H2O2) and a metal catalyst, for example, an iron catalyst. The iron catalyst may be in the form of iron oxide nanoparticles. The photocatalyst reagent oxidizes the PFAS contaminants as part of an oxidation process. The presence of the nanosize magnetite particles and UV radiation increases the reaction rate compared to aqueous iron species on destruction of PFAS groups. The application of ultrasound provides even more effective degradation of different PFAS.

In one or more embodiments which can be combined with other embodiments, a flow reactor for removal of PFAS from a fluid is provided.

In one or more embodiments which can be combined with other embodiments, a batch reactor for removal of PFAS from a fluid is provided.

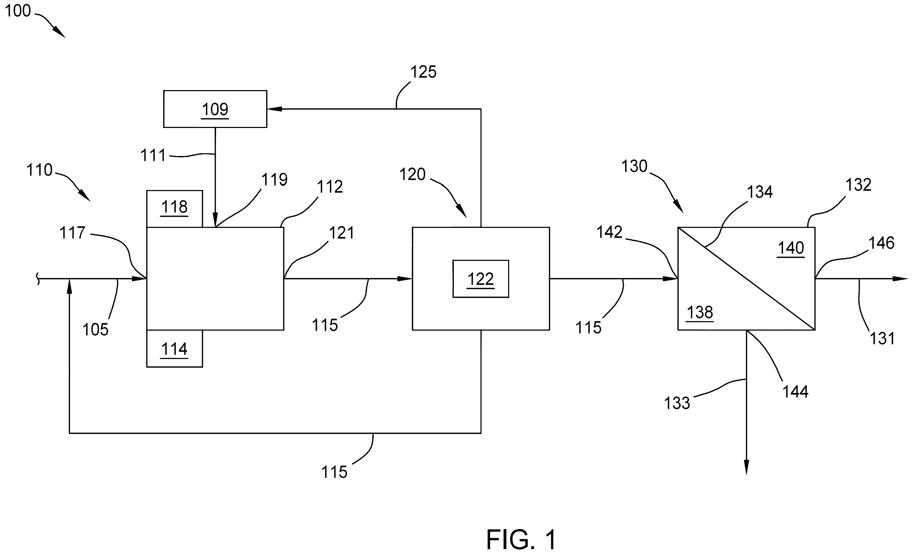

FIG. 1 is a schematic illustration of a system 100 for removing PFAS from a fluid in accordance with one or more embodiments of the present disclosure. The system 100 includes a reactor stage 110, a membrane separation stage 130, and optionally an ion monitoring stage 120. The membrane separation stage 130 is positioned downstream from the reactor stage 110. In some embodiments, as is shown in FIG. 1, if present, the ion monitoring stage 120 is positioned downstream from the reactor stage 110 and upstream from the membrane separation stage 130. The reactor stage 110 includes adding a photocatalyst reagent stream 111 including a metal oxide catalyst to a PFAS contaminated aqueous stream 105 in the presence of UV radiation and ultrasonic energy to reduce a chain length of the PFAS contaminants and produce a treated fluid stream 115 including water and byproducts of the degraded PFAS contaminants. The byproducts of the degraded PFAS contaminants can further include carbon dioxide, sulfate ions (SO42-), phosphate ions (PO43-), and fluoride ions (F-). The treated fluid stream 115 can further include metal catalyst particles from the photocatalyst reagent stream.

The PFAS contaminated aqueous stream 105 can be or include contaminated water, waste, and/or groundwater. The PFAS contaminated aqueous stream 105 can include additional ions or impurities. "PFAS" is used as a general term to represent perfluoroalkyl or polyfluoroalkyl substances. PFAS include but are not limited to perfluorooctanesulfonic acid (PFOS), perfluorooctanoic acid (PFOA), perfluorooctanesulfonamide (PFOSA), perfluorohexanoic acid (PFHxA), perfluoropentanoic acid (PFPeA), pentafluorobenzoic acid (PFBzA), perfluorobutanoic acid (PFBA), perfluorohexanesulfonic acid (PFHxS), perfluorobutanesulfonic acid (PFBS), perfluorodecanoic acid (PFDA), perfluorododecanoic acid (PFDoA), perfluoroheptanoic acid (PFHpA), perfluorononanoic acid (PFNA), perfluoroundecanoic acid (PFUnA), perfluorononanoic acid (PFNA), hexafluoropropylene oxide-dimer acid (HFPO-DA), perfluoro-2-methoxyacetic acid (PFMOAA), perfluoro-2-mthoxypropionic acid (PMPA), fluorotelomer, or any combination thereof.

The reactor stage 110 is represented as including a reactor vessel 112. A single vessel as is show in FIG. 1 or a plurality of vessels may be used. The reactor vessel 112 can be a batch reactor or a continuous flow reactor. The PFAS contaminated aqueous stream 105 enters the reactor vessel 112 via a first inlet 117. The photocatalyst reagent stream 111 enters the reactor vessel 112 via a second inlet 119. In one or more embodiments, the photocatalyst reagent stream 111 can be combined with the PFAS contaminated aqueous stream 105 prior to entering the reactor vessel 112 via the first inlet 117. The photocatalyst reagent stream 111 may be supplied by a photocatalyst reagent source 109. The reactor vessel 112 also includes a first outlet 121 through which the treated fluid stream 115 exits the reactor vessel 112. The treated fluid stream 115 contains a lower concentration of PFAS than the PFAS contaminated aqueous stream 105.

The reactor stage 110 is represented in one stage with one reactor vessel 112 but it can also be in several stages, including a plurality of vessels which receive identical or different photocatalyst reagents therein arranged in series. In such embodiments the treated fluid stream 115 or derivatives thereof exiting a first reactor vessel can be directed to the inlet of a second reactor vessel to remove additional PFAS contaminants and to further purify the treated fluid stream 115 or derivative thereof before a final purified fluid stream is produced. In still other embodiments, the reactor stage 110 may include a plurality of reactor vessels arranged in parallel.

The reactor stage 110 includes one or more ultraviolet (UV) radiation sources 114. The one or more UV radiation sources 114 can be or include lamps, light emitting diodes (LEDs), or laser diodes. In one or more embodiments, the wavelength of UV radiation is in a range from about 100 nanometers to about 400 nanometers, or in a range from about 150 nanometers to about 380 nanometers, for example, about 254 nanometers. The one or more UV radiation sources 114 can produce UVA radiation, UVB radiation, or UVC radiation. UVA radiation includes radiation having one or more wavelengths in the range of about 315 nanometers to about 400 nanometers. UVB radiation includes radiation having one or more wavelengths in the range of about 280 nanometers to about 315 nanometers. UVC radiation includes radiation having one or more wavelengths in the range of about 100 nanometers to about 280 nanometers. In one or more embodiments, the one or more UV radiation sources 114 have a wattage in a range from about 1 W to about 50 W, or in a range from about 10 W to about 20 W, for example, about 15 W.

The reactor stage 110 further includes one or more ultrasonic transducers 118. The one or more ultrasonic transducers 118 are configured to deliver ultrasonic energy to the PFAS contaminated aqueous stream 105. Not to be bound by theory but it is believed that the application of ultrasonic energy enhances the catalytic degradation of PFAS via sonocatalysis. The one or more ultrasonic transducers 118 may generate transverse and/or longitudinal ultrasound waves. The one or more ultrasonic transducers 118 can be implemented, for example, using piezoelectric actuators, or any other suitable mechanism that can generate vibrations at ultrasonic frequencies of desired amplitude. The one or more ultrasonic transducers 118 can operate at a frequency of 20 KHz or higher, for example, in a range from about 20 KHz to about 1 MHz, or in a range from about 20 kHz to about 100 kHz, or in a range from about 20 kHz to about 40 kHz. The one or more ultrasonic transducers 118 can operate at a power in a range from about 100 Watts to about 900 Watts. In one or more embodiments, the one or more ultrasonic transducers 118 operate at a frequency of about 20 KHz at a power in a range from about 100 Watts to about 900 Watts. The one or more ultrasonic transducers can include a single transducer, as shown in FIG. 1, or an array of multiple transducers, oriented to direct ultrasonic energy toward the PFAS contaminated aqueous stream 105. When the one or more ultrasonic transducers 118 direct energy toward the PFAS contaminated aqueous stream 105, acoustic streaming helps to enhance the catalytic degradation of PFAS. In one or more embodiments the one or more ultrasonic transducers 118 include a sonotrode. The sonotrode can be or include a stack of piezoelectric transducers attached to a metal rod.

The photocatalyst reagent stream 111 can include any suitable oxidizing reagent capable of oxidizing PFAS contaminants in the PFAS contaminated aqueous stream 105. The photocatalyst reagent stream 111 can further include a metal oxide catalyst for activating the oxidizing reagent. In one or more embodiments, the oxidizing reagent is or includes hydrogen peroxide (H2O2), peroxymonosulfate (PMS), persulfate (PS), or a combination thereof. In one or more embodiments, the metal oxide catalyst is or includes iron (Fe2+), silver (Ag+), indium (In3+), titanium (Ti2+), or a combination thereof. In one or more embodiments, the metal oxide catalyst is or includes iron oxide, silver oxide, indium oxide, titanium oxide, iron oxide/graphenic carbon (Fe/g-C), or a combination thereof. In one or more embodiments, the photocatalyst reagent stream 111 includes a Fenton's reagent. In one or more embodiments, the oxidizing reagent is hydrogen peroxide and the metal catalyst is iron oxide, for example Fe3O4 particles or nanoparticles. In one or more embodiments, the oxidizing reagent and the metal catalyst are mixed ex-situ prior to introduction into the PFAS contaminated aqueous stream 105. In one or more other embodiments, the oxidizing reagent and the metal catalyst are introduced into the PFAS contaminated aqueous stream 105 separately and mixed in-situ in the PFAS contaminated aqueous stream 105. In one or more embodiments, the photocatalyst reagent stream 111 includes magnetite Fe3O4 nanoparticles at a concentration in a range from about 100 to 2,000 ppm and 3 to 20 weight percent of hydrogen peroxide.

During the reactor stage 110, the PFAS contaminated aqueous stream 105 is exposed to the photocatalyst reagent stream 111, UV radiation, and ultrasonic energy to generate the catalytic degradation of PFAS. The combination of the photocatalyst reagent stream 111, the UV radiation, and the ultrasonic energy selectively decomposes the one or more PFAS impurities from the PFAS contaminated aqueous stream 105 to produce a treated fluid stream 115 including nontoxic byproducts of the PFAS decomposition. The byproducts can include water, carbon dioxide, sulfate ions (SO42-), phosphate ions (PO43-), and fluoride ions (F-). There is generally little concern regarding the discharge of the aforementioned byproducts because the byproducts are generally found in water naturally.

In one or more embodiments where the ion monitoring stage 120 is present, the treated fluid stream 115 including the byproducts and optionally residual amounts of the PFAS contaminants is subjected to testing to monitor an ion concentration in the treated fluid stream 115. Any suitable testing methods and equipment may be used to monitor the ion concentration in the treated fluid stream 115. Examples of suitable testing methods include but are not limited to Surface-enhanced Raman scattering (SERS), Raman spectroscopy, potentiometry, chromatography, colorimetry, or combinations of the aforementioned techniques. In one or more embodiments the ion recovery stage includes an ion selective electrode 122 form monitoring ion concentration. In one or more embodiments, the ion selective electrode 122 measures the concentration of fluoride ions. A defluorination rate (degradation rate) is calculated based on the fluoride ion concentration and the initial concentration of PFAS contaminants. The initial concentration of PFAS can be determined using EPA standard testing methods, for example, any of EPT Method 533, EPA Method 537.1, EPM Method 537M, and EPA Method 1633. If the targeted defluorination rate is not achieved, the treated fluid stream 115 may be recirculated to the reactor stage 110 for the removal of additional PFAS contaminants. If the targeted defluorination rate is achieved, the treated fluid stream 115 or derivatives thereof is delivered to the membrane separation stage 130 for removal of particulates, for example, metal catalyst nanoparticles from the treated fluid stream 115. The ion monitoring stage 120 is typically performed in a vessel of some kind and a single vessel or a plurality of vessels may be used. In one or more embodiments, the process conditions in the reactor stage 110 can be adjusted based on the results of the ion monitoring stage 120. For example, any of the flow of photocatalyst reagent, the application of UV energy, the application of ultrasonic energy, the reaction temperature, and the flow of PFAS contaminated aqueous stream 105 into the reactor stage 110, may be either increased or decreased based on the results of the ion monitoring stage 120.

In one or more embodiments where colorimetry is used to determine ion concentration, the ion selective electrode 122 can be replaced with colorimeters and spectrometers, which are used to measure the intensity of light transmitted through the treated fluid stream 115. In one or more embodiments where ion chromatography is used, the ion selective electrode 122 can be replaced with a conductivity detector. In one or more embodiments where ion chromatography is used, the ion selective electrode 122 can be replaced with a conductivity detector. In one or more embodiments where potentiometry is used, the ion selective electrode 122 can include a fluoride-selective electrode (ISE) and optionally a reference electrode.

In embodiments, where the ion monitoring stage 120 is not present, the treated fluid stream 115 is delivered directly to the membrane separation stage 130.

The membrane separation stage 130 removes one or more byproducts from the treated fluid stream 115 or derivatives thereof to produce a purified fluid stream 131 and a waste stream 133 including the removed byproducts. The membrane separation stage 130 is represented as including a membrane separation vessel 132 that has a membrane 134 disposed therein. The membrane 134 can be a semi-permeable membrane. The membrane 134 can be a nanofiltration membrane or more generally any type of membrane that enables water molecules to permeate while one or more byproducts mostly do not permeate. In one or more embodiments, which can be combined with other embodiments, the membrane 134 is selective for removing one or more byproducts, for example, metal catalyst nanoparticles such as iron oxide nanoparticles. The membrane 134 separates the membrane separation vessel 132 into a first volume 138 that receives a stream to be purified, here the treated fluid stream 115, and a second volume 140 where permeating water molecules collect. The treated fluid stream 115 including the residual amounts of byproducts enters the membrane separation vessel 132 via an inlet 142 to the first volume 138. The membrane separation vessel 132 also includes a first outlet 144 of the first volume 138 through which a waste stream 133 including the removed byproducts exits the membrane separation vessel 132. The membrane separation vessel 132 further includes a second outlet 146 through which a purified fluid stream 131 that passed through the membrane 134 (i.e. a permeate stream) exits the membrane separation vessel 132. The purified fluid stream 131 contains a lower concentration of byproducts than the treated fluid stream 115. The removed byproducts including iron oxide nanoparticles may be returned to the photocatalyst reagent source 109 as a recycled catalyst stream 125 and reused in the photocatalyst reagent source 109.

The membrane separation stage 130 is represented in one stage with one vessel but it can also be in several stages, including a plurality of vessels with identical or different semi-permeable membranes therein arranged in series. In such embodiments the purified fluid stream 131 exiting a first membrane separation vessel can be directed to the inlet of a second membrane separation vessel to remove additional impurities from the purified fluid stream 131. In still other embodiments, the membrane separation stage 130 may include a plurality of membrane separation vessels arranged in parallel.

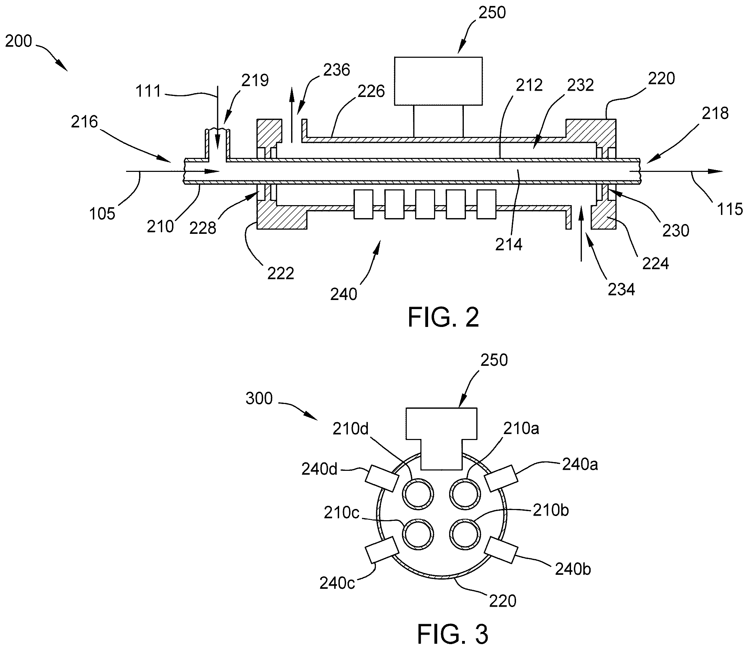

FIG. 2 is a schematic illustration of a continuous flow reactor assembly 200 in accordance with one or more embodiments of the present disclosure. The continuous flow reactor assembly 200 may be used in the reactor stage 110. The continuous flow reactor assembly 200 is designed to treat a PFAS contaminated fluid, for example, the PFAS contaminated aqueous stream 105, by exposing the PFAS contaminated fluid to an ultrasonic assisted nanoparticle-catalyzed UV-photocatalyst reaction to degrade the PFAS contaminants in the fluid as the fluid flows through the continuous flow reactor assembly 200. The continuous flow reactor assembly 200 includes one or more tubular reactor bodies 210 through which the PFAS contaminated fluid is transported during treatment. The continuous flow reactor assembly 200 may include any suitable number of tubular reactor bodies 210. In one or more embodiments, the continuous flow reactor assembly 200 includes from one to six tubular reactor bodies. The continuous flow reactor assembly 200 further includes an outer reactor body 220 which encircles the tubular reactor body 210. The outer reactor body 220 enables the flow of a pressurized fluid around the tubular reactor body 210 to provide temperature control of the fluid flowing through the tubular reactor body 210 as well as providing a transfer medium for the transfer of ultrasonic waves. The continuous flow reactor assembly 200 further includes a plurality of ultraviolet radiation sources 240 for delivering UV radiation to the PFAS contaminated aqueous stream 105 traveling through the tubular reactor body 210. The continuous flow reactor assembly 200 further includes one or more ultrasonic transducers 250 for delivering ultrasonic energy to the PFAS contaminated fluid traveling through the tubular reactor body 210.

The tubular reactor body 210 includes a reactor wall 212 which is at least partially transmissive to UV radiation. In one or more embodiments, the reactor wall 212 comprises quartz. The reactor wall 212 defines a reactor region 214 through which the PFAS contaminated aqueous stream 105 flows. The tubular reactor body 210 includes a first inlet 216 through which the PFAS contaminated aqueous stream 105 enters the reactor region 214. The tubular reactor body 210 further includes a first outlet 218 through which the treated fluid exits the reactor region 214. In one or more embodiments, the first outlet 218 is positioned opposite the first inlet 216 as shown in FIG. 2, however, other configurations are also contemplated. The tubular reactor body 210 further includes a second inlet 219 through which the photocatalyst reagent stream 111 is delivered to the PFAS contaminated aqueous stream 105. The second inlet 219 is typically formed through the reactor wall 212. In one or more embodiments, the second inlet 219 is positioned downstream from the first inlet 216 and upstream from the plurality of ultraviolet radiation sources 240 and/or the ultrasonic transducers 250. Although the second inlet 219 is shown as a single inlet, multiple inlets may be used to deliver the photocatalyst reagent stream 111 to the PFAS contaminated fluid. For example, one inlet may be configured for delivery of hydrogen peroxide and a second inlet may be configured for delivery of iron oxide nanoparticles to the PFAS contaminated aqueous stream 105.

The continuous flow reactor assembly 200 further includes the outer reactor body 220 which encircles the tubular reactor body 210. The outer reactor body 220 includes a first end 222, a second end 224 opposite the first end 222, and a sidewall 226 extending from the first end 222 to the second end 224. A first inlet 228 for accommodating the tubular reactor body 210 is formed through the first end 222. A first outlet 230 for accommodating the tubular reactor body 210 is formed through the second end 224. The sidewall 226 of the outer reactor body 220 is spaced apart from the reactor wall 212 of the tubular reactor body 210 such that a second region 232 is defined by the sidewall 226, the first end 222, and the second end 224 of the outer reactor body 220 and the reactor wall 212 of the inner reactor body. The second region 232 may be sealed so that a pressurized temperature control fluid can be flowed through the second region 232. The outer reactor body 220 further includes a second inlet 234 for delivering the temperature control fluid to the second region 232 and a second outlet 236 for removing the temperature control fluid from the second region 232. In operation, the temperature control fluid enters the second region 232 via the second inlet 234 and flows between an internal surface of the sidewall 226 and an external surface of the reactor wall 212 of the tubular reactor body 210 to control the temperature of the fluid flowing through the tubular reactor body 210.

The outer reactor body 220 may comprise any suitable material. In one or more embodiments, the outer reactor body 220 comprises a polymer composite, quartz, a metallic material or alloy thereof. In some embodiments where at least one of the plurality of ultraviolet radiation sources 240 and/or the one or more ultrasonic transducers 250 are positioned external to the outer reactor body 220, the outer reactor body 220 comprises a material which is at least partially transmissive to UV radiation and/or the ultrasonic energy. The outer reactor body 220 may be any suitable shape. In one or more embodiments, the outer reactor body 220 is tubular.

The continuous flow reactor assembly 200 further includes one or more ultraviolet radiation sources 240 positioned to deliver UV radiation to the PFAS contaminated aqueous stream 105 traveling through the tubular reactor body 210. The one or more ultraviolet radiation sources 240 can be similar to the one or more UV radiation sources 114. The one or more ultraviolet radiation sources 240 can be or include lamps, light emitting diodes (LEDs), or laser diodes. In one or more embodiments, as is shown in FIG. 2, the one or more ultraviolet radiation sources 240 are positioned in a port extending through the sidewall 226 of the outer reactor body 220. In one or more embodiments, the one or more ultraviolet radiation sources 240 are positioned external to the sidewall 226 of the outer reactor body 220. In one or more embodiments, the internal or partially internal to the second region 232 in between the reactor wall 212 of the tubular reactor body 210 and the sidewall 226 of the outer reactor body 220. In one or more embodiments, the one or more ultraviolet radiation sources 240 includes three or more ultraviolet radiation sources positioned around the circumference of the tubular reactor body 210 with each of the ultraviolet radiation sources incorporating four to six UV-C bulbs, for example, 15 watt UV-C bulbs having a wavelength of about 254 nanometers.

The continuous flow reactor assembly 200 further includes the one or more ultrasonic transducers 250. The one or more ultrasonic transducers 250 are positioned to deliver ultrasonic energy to the PFAS contaminated aqueous stream 105 as the PFAS contaminated aqueous stream 105 travels through the reactor region 214. The one or more ultrasonic transducers 250 can be similar to the one or more ultrasonic transducers 118. In one or more embodiments, the one or more ultrasonic transducers 250 are positioned in a port that extends through the sidewall 226 of the outer reactor body 220. In one or more embodiments, as is shown in FIG. 2, the one or more ultrasonic transducers 250 are positioned external to the sidewall 226 of the outer reactor body 220. In one or more embodiments, one or more ultrasonic transducers 250 are positioned internal or partially internal to the second region 232 in between the reactor wall 212 of the tubular reactor body 210 and the sidewall 226 of the outer reactor body 220. In one or more embodiments, the one or more ultrasonic transducers 250 have an ultrasonic probe power in a range from about 100 Watts to about 900 Watts at a frequency of about 20 KHz.

FIG. 3 is a schematic illustration of another continuous flow reactor 300 in accordance with one or more embodiments of the present disclosure. The continuous flow reactor 300 is similar to the continuous flow reactor assembly 200, except that the continuous flow reactor 300 includes multiple tubular reactor bodes 210a-d enclosed by the outer reactor body 220 with multiple arrangements of UV radiation sources 240a-d positioned around the circumference of the outer reactor body 220. In one or more embodiments as shown in FIG. 3, each of the tubular reactor bodes 210a-d has a dedicated arrangement of UV radiation sources 240a-d. In one or more examples, the continuous flow reactor 300 includes four tubular reactor bodies 210a-d with four corresponding arrangements of UV radiation sources 240a-d.

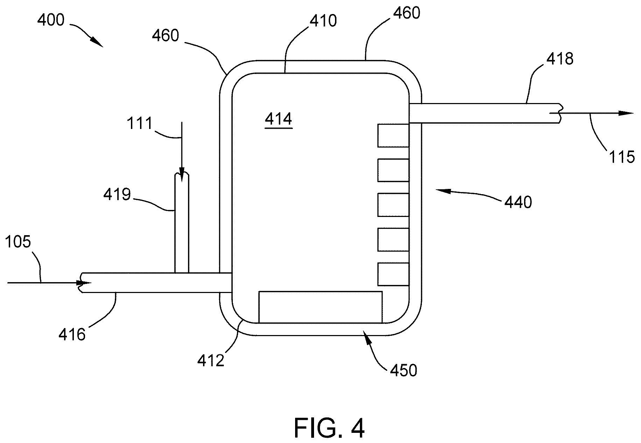

FIG. 4 is a schematic illustration of a batch reactor assembly 400 in accordance with one or more embodiments of the present disclosure. The batch reactor assembly 400 may be used in the reactor stage 110. The batch reactor assembly 400 is designed to hold and treat a PFAS contaminated fluid, for example, the PFAS contaminated aqueous stream 105, by exposing the PFAS contaminated fluid to an ultrasonic assisted nanoparticle-catalyzed UV-photocatalyst reaction to degrade the PFAS contaminants in the fluid. The batch reactor assembly 400 includes a batch reactor body 410 in which the PFAS contaminated fluid is held during treatment. The batch reactor assembly 400 further includes a plurality of UV radiation sources 440 for delivering UV radiation to the PFAS contaminated aqueous stream 105 held in the batch reactor body 410. The batch reactor assembly400 further includes one or more ultrasonic transducers 450 for delivering ultrasonic energy to the PFAS contaminated fluid held in the batch reactor body 410. The batch reactor assembly 400 may further includes a temperature control jacket 460 which encircles the batch reactor body 410.

The batch reactor body 410 includes a reactor wall 412 that defines a batch reactor region 414 in which the PFAS contaminated aqueous stream 105 is held during treatment. The batch reactor body 410 includes a first inlet 416 through which the PFAS contaminated aqueous stream 105 enters the batch reactor region 414. The batch reactor body 410 further includes a first outlet 418 through which the treated fluid exits the batch reactor region 414 after treatment. In one or more other embodiments, the photocatalyst reagent stream 111 is added to the PFAS contaminated aqueous stream 105 via a second inlet 419 prior to entry of the PFAS contaminated aqueous stream 105 into the batch reactor region 414. In one or more other embodiments, the batch reactor body 410 further includes a second inlet through which the photocatalyst reagent stream 111 is added to the PFAS contaminated aqueous stream 105 in the batch reactor region 414. Although the second inlet 419 is shown as a single inlet, multiple inlets may be used to deliver the photocatalyst reagent stream 111 to the PFAS contaminated aqueous stream 105. For example, one inlet may be configured for delivery of hydrogen peroxide and a second inlet may be configure for delivery of iron oxide nanoparticles to the PFAS contaminated aqueous stream 105.

The batch reactor assembly 400 further includes the one or more UV radiation sources 440 positioned to deliver UV radiation to the PFAS contaminated aqueous stream 105 held in the batch reactor body 410. The one or more UV radiation sources 440 can be similar to the one or more UV radiation sources 114. The one or more UV radiation sources 440 can be or include lamps, light emitting diodes (LEDs), or laser diodes. In one or more embodiments, as is shown in FIG. 4, the one or more UV radiation sources 440 are positioned within the batch reactor region 414. In some embodiments where the one or more UV radiation sources 440 are positioned within the batch reactor region 414 the one or more UV radiation sources 440 are encapsulated in a UV transmissive material, which protects the one or more UV radiation sources 440 from exposure to the PFAS contaminated aqueous stream 105. In one or more other embodiments, the reactor wall 412 includes one or more ports for accommodating the one or more UV radiation sources 440. The one or more ports are designed to prevent exposure of the one or more UV radiation sources 440 to the PFAS contaminated aqueous stream 105 while allowing transmission of UV radiation from the one or more UV radiation sources 440 into the batch reactor region 414. In one or more embodiments, the one or more UV radiation sources 440 are positioned external to the reactor wall 412 and the reactor wall is at least partially transmissive to UV radiation. In one or more embodiments, the one or more UV radiation sources 440 includes four to six UV-C bulbs, for example, 15 watt UV-C bulbs having a wavelength of about 254 nanometers.

The batch reactor assembly 400 further includes the one or more ultrasonic transducers 450. The one or more ultrasonic transducers 450 are positioned to deliver ultrasonic energy to the PFAS contaminated aqueous stream 105 as the PFAS contaminated aqueous stream 105 is held in the batch reactor region 414. The one or more ultrasonic transducers 450 can be similar to the one or more ultrasonic transducers 118. In one or more embodiments, as is shown in FIG. 4, the one or more ultrasonic transducers 450 are positioned within the batch reactor region 414. In some embodiments where the one or more ultrasonic transducers 450 are positioned within the batch reactor region 414 the one or more ultrasonic transducers 450 are encapsulated in a transmissive material, which protects the one or more ultrasonic transducers 450 from exposure to the PFAS contaminated aqueous stream 105 while allowing transmission of the ultrasonic energy into the batch reactor region 414. In one or more embodiments, the one or more ultrasonic transducers 450 are positioned in a port that extends through the reactor wall 412 of the batch reactor body 410. In one or more embodiments, the one or more ultrasonic transducers 450 are positioned external to the reactor wall 412 of the batch reactor body 410. In one or more embodiments, the one or more ultrasonic transducers 250 have an ultrasonic probe power in a range from about 100 Watts to about 900 Watts at a frequency of about 20 KHz.

The batch reactor assembly 400 may further include the temperature control jacket 460 which encircles the batch reactor body 410. The temperature control jacket 460 surrounds an outer surface of the reactor wall 412. The temperature control jacket 460 can be composed of aluminum, stainless steel, molybdenum, alloys thereof, or combinations thereof. The temperature control jacket 460 is operable to control the temperature of the batch reactor assembly 400 by providing a heated or cooled fluid. The temperature control jacket 460 can surround and be in thermal connection with the batch reactor body 410. The temperature control jacket 460 can include a thermal fluid, for example, water, oil, or steam, as the heating or cooling medium. A temperature measurement device can be coupled to at least one of the temperature control jacket 460 and/or the batch reactor region 414 to provide feedback to a controller, for example, a system controller. A flow control mechanism can be provided for changing a flow rate of the heated or cooled fluid through the temperature control jacket 460 based upon a temperature reading received through feedback from the temperature measurement device. Other temperature control sources can be used with the batch reactor assembly 400. In one or more other embodiments, the temperature control jacket 460 can be replaced with heating coils or another suitable temperature control mechanism. For example, a resistive heater can be thermally coupled or in thermal contact with the batch reactor body 410 for controlling the temperature of the batch reactor assembly 400.

The previously described embodiments of the present disclosure have many advantages, including the environmentally safe removal of PFAS families from aqueous based fluids. The PFAS contaminants are broken down into byproducts which naturally occur in water. In addition, the ability to recycle and reuse catalysts reduces operating expenses. However, the present disclosure does not necessitate that all of the advantageous features and all the advantages need to be incorporated into every embodiment of the present disclosure.

### Example Clauses

Implementation examples are described in the following numbered clauses:
Clause 1: A method for removing PFAS contaminants from a PFAS contaminated aqueous stream, comprising introducing the PFAS contaminated aqueous stream into a reactor with a photocatalyst reagent in the presence of UV radiation and ultrasonic energy to degrade the PFAS contaminants and produce a treated aqueous stream comprising byproducts of the degraded PFAS contaminants.
Clause 2: The method of clause 1, wherein the reactor is a continuous flow reactor or a batch reactor.
Clause 3: The method of clause 1 or 2, wherein the photocatalyst reagent comprises hydrogen peroxide and metal oxide particles.
Clause 4: The method of clause 3, wherein the metal oxide particles comprise iron oxide, silver oxide, indium oxide, titanium oxide, iron oxide/graphenic carbon (Fe/g-C), or a combination thereof.
Clause 5: The method of any of clauses 1 to 4, further comprising monitoring an initial concentration of the PFAS contaminants in the PFAS contaminated aqueous stream prior to introducing the PFAS contaminated aqueous stream into the reactor; measuring a fluoride ion concentration in the treated aqueous stream using an ion selective electrode, ion chromatography, or colorimetry; and determining a defluorination rate of the PFAS contaminants based on the initial concentration of the PFAS contaminants and the fluoride ion concentration.
Clause 6: The method of clause 5, further comprising filtering metal oxide particles of the photocatalyst reagent from the treated aqueous stream if the defluorination rate is greater than a targeted defluorination rate.
Clause 7: The method of clause 5, further comprising recirculating the treated aqueous stream into the reactor if the defluorination rate is less than a targeted defluorination rate.
Clause 8: A method for removing PFAS contaminants from a PFAS contaminated aqueous stream, comprising introducing the PFAS contaminated aqueous stream into a continuous flow reactor with a photocatalyst reagent in the presence of UV radiation and ultrasonic energy to degrade the PFAS contaminants and produce a treated aqueous stream comprising byproducts of the degraded PFAS contaminants, wherein the continuous flow reactor comprises one or more tubular reactor bodies in which the PFAS contaminated aqueous stream and the photocatalyst reagent are exposed to the UV radiation and the ultrasonic energy; and an outer reactor body that encircles the one or more tubular reactor bodies.
Clause 9: The method of clause 8, further comprising flowing a temperature control fluid in between an outer surface of the one or more tubular reactor bodies and an internal surface of the outer reactor body to control a reaction temperature during degradation of the PFAS contaminants.
Clause 10: The method of clause 9, wherein the temperature control fluid functions as a transmission medium for transferring the ultrasonic energy to the PFAS contaminated aqueous stream.
Clause 11: The method of any of clauses 8 to 10, wherein the continuous flow reactor further comprises one or more UV sources positioned to deliver the UV radiation to the PFAS contaminated aqueous stream and the photocatalyst reagent; and one or more ultrasonic transducers positioned to deliver the ultrasonic energy to the PFAS contaminated aqueous stream and the photocatalyst reagent.
Clause 12: The method of clause 11, wherein the one or more UV sources comprise UV-C sources having a wavelength in a range from about 100 nanometers to about 280 nanometers.
Clause 13: The method of clause 11 or 12, wherein the one or more ultrasonic transducers have an ultrasonic probe power in a range from about 100 Watts to about 900 Watts at a frequency of about 20 KHz or higher.
Clause 14: The method of any of clauses 8 to 13, wherein the one or more tubular reactor bodies comprise quartz.
Clause 15: The method of any of clauses 8 to 14, wherein the one or more tubular reactor bodies comprise two to six tubular bodies.
Clause 16: The method of any of clauses 8 to 14, wherein the photocatalyst reagent comprises hydrogen peroxide and metal oxide nanoparticles.
Clause 17: A continuous flow reactor, comprising one or more quartz tubular reactor bodies that each define a reactor region in which a PFAS contaminated aqueous stream flows and a photocatalyst reagent are exposed to UV radiation and ultrasonic energy to degrade the PFAS contaminants; an outer reactor body that encircles the one or more quartz tubular reactor bodies; one or more UV sources positioned to deliver the UV radiation to the PFAS contaminated aqueous stream and the photocatalyst reagent; and one or more ultrasonic transducers positioned to deliver the ultrasonic energy to the PFAS contaminated aqueous stream and the photocatalyst reagent.
Clause 18: The continuous flow reactor of clause 17, wherein an outer surface of the one or more tubular reactor bodies and an internal surface of the outer reactor body define a temperature control region through which a temperature control region to control a reaction temperature during degradation of the PFAS contaminants.
Clause 19: The continuous flow reactor of clause 17 or 18, wherein the one or more UV sources comprise UV-C sources having a wavelength in a range from about 100 nanometers to about 280 nanometers and the one or more ultrasonic transducers have an ultrasonic probe power in a range from about 100 Watts to about 900 Watts at a frequency of about 20 KHz or higher.
Clause 20: The continuous flow reactor of any of clauses 17 to 19, wherein the one or more quartz tubular bodies comprise two to six quartz tubular bodies.

### Additional Considerations

The preceding description is provided to enable any person skilled in the art to practice the various aspects described herein. The examples discussed herein are not limiting of the scope, applicability, or aspects set forth in the claims. Various modifications to these aspects will be readily apparent to those skilled in the art, and the general principles defined herein may be applied to other aspects. For example, changes may be made in the function and arrangement of elements discussed without departing from the scope of the disclosure. Various examples may omit, substitute, or add various procedures or components as appropriate. For instance, the methods described may be performed in an order different from that described, and various actions may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, a system on a chip (SoC), or any other such configuration.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, "a processor," "at least one processor," or "one or more processors" generally refer to a single processor configured to perform one or multiple operations or multiple processors configured to collectively perform one or more operations. In the case of multiple processors, performance of the one or more operations could be divided amongst different processors, though one processor may perform multiple operations, and multiple processors could collectively perform a single operation. Similarly, "a memory," "at least one memory," or "one or more memories" generally refer to a single memory configured to store data and/or instructions or multiple memories configured to collectively store data and/or instructions.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more actions for achieving the methods. The method actions may be interchanged with one another without departing from the scope of the claims. In other words, unless a specific order of actions is specified, the order and/or use of specific actions may be modified without departing from the scope of the claims. Further, the various operations of methods described above may be performed by any suitable means capable of performing the corresponding functions. The means may include various hardware and/or software component(s) and/or module(s), including, but not limited to a circuit, an ASIC, or processor.

The following claims are not intended to be limited to the aspects shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for". All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method for removing PFAS contaminants from a PFAS contaminated aqueous stream, comprising:
introducing the PFAS contaminated aqueous stream into a reactor with a photocatalyst reagent in the presence of UV radiation and ultrasonic energy to degrade the PFAS contaminants and produce a treated aqueous stream comprising byproducts of the degraded PFAS contaminants.

2. The method of claim 1, wherein the reactor is a continuous flow reactor or a batch reactor.

3. The method of claim 1 or 2, wherein the photocatalyst reagent comprises hydrogen peroxide and metal oxide particles, wherein the metal oxide particles preferably comprise iron oxide, silver oxide, indium oxide, titanium oxide, iron oxide/graphenic carbon (Fe/g-C), or a combination thereof.

4. The method of any one of the preceding claims, further comprising:
monitoring an initial concentration of the PFAS contaminants in the PFAS contaminated aqueous stream prior to introducing the PFAS contaminated aqueous stream into the reactor;
measuring a fluoride ion concentration in the treated aqueous stream using an ion selective electrode, ion chromatography, or colorimetry; and
determining a defluorination rate of the PFAS contaminants based on the initial concentration of the PFAS contaminants and the fluoride ion concentration, preferably further comprising:
filtering metal oxide particles of the photocatalyst reagent from the treated aqueous stream if the defluorination rate is greater than a targeted defluorination rate.

5. The method of claim 4, further comprising:
recirculating the treated aqueous stream into the reactor if the defluorination rate is less than a targeted defluorination rate.

6. The method according to any one of the preceding claims, wherein the reactor is a continuous flow reactor comprising:
one or more tubular reactor bodies in which the PFAS contaminated aqueous stream and the photocatalyst reagent are exposed to the UV radiation and the ultrasonic energy; and
an outer reactor body that encircles the one or more tubular reactor bodies.

7. The method of claim 6, further comprising:
flowing a temperature control fluid in between an outer surface of the one or more tubular reactor bodies and an internal surface of the outer reactor body to control a reaction temperature during degradation of the PFAS contaminants, wherein the temperature control fluid preferably functions as a transmission medium for transferring the ultrasonic energy to the PFAS contaminated aqueous stream.

8. The method of claim 6 or 7, wherein the continuous flow reactor further comprises:
one or more UV sources positioned to deliver the UV radiation to the PFAS contaminated aqueous stream and the photocatalyst reagent; and
one or more ultrasonic transducers positioned to deliver the ultrasonic energy to the PFAS contaminated aqueous stream and the photocatalyst reagent, wherein the one or more UV sources preferably comprise UV-C sources having a wavelength in a range from about 100 nanometers to about 280 nanometers.

9. The method of claim 8, wherein the one or more ultrasonic transducers have an ultrasonic probe power in a range from about 100 Watts to about 900 Watts at a frequency of about 20 KHz or higher.

10. The method of any one of the claims 6 - 9, wherein the one or more tubular reactor bodies comprise quartz, wherein the one or more tubular reactor bodies preferably comprise two to six tubular bodies.

11. The method of any one of the claims 6 - 10, wherein the photocatalyst reagent comprises hydrogen peroxide and metal oxide nanoparticles.

12. A continuous flow reactor, comprising:
one or more quartz tubular reactor bodies that each define a reactor region in which a PFAS contaminated aqueous stream flows and a photocatalyst reagent are exposed to UV radiation and ultrasonic energy to degrade the PFAS contaminants;
an outer reactor body that encircles the one or more quartz tubular reactor bodies;
one or more UV sources positioned to deliver the UV radiation to the PFAS contaminated aqueous stream and the photocatalyst reagent; and
one or more ultrasonic transducers positioned to deliver the ultrasonic energy to the PFAS contaminated aqueous stream and the photocatalyst reagent.

13. The continuous flow reactor of claim 12, wherein an outer surface of the one or more quartz tubular reactor bodies and an internal surface of the outer reactor body define a temperature control region through which a temperature control fluid flows to control a reaction temperature during degradation of the PFAS contaminants.

14. The continuous flow reactor of claim 12 or 13, wherein the one or more UV sources comprise UV-C sources having a wavelength in a range from about 100 nanometers to about 280 nanometers and the one or more ultrasonic transducers have an ultrasonic probe power in a range from about 100 Watts to about 900 Watts at a frequency of about 20 KHz or higher.

15. The continuous flow reactor of claim 12, 13 or 14, wherein the one or more quartz tubular reactor bodies comprise two to six quartz tubular bodies.
